Europäisches Patentamt

**European Patent Office**

**Office européen des brevets**

(19)

(11) Numéro de publication : **0 040 109**
**B1**

(12)
# FASCICULE DE BREVET EUROPÉEN

(45) Date de publication du fascicule du brevet :
**13.06.84**

(51) Int. Cl.³ : **B 60 R 19/08**

(21) Numéro de dépôt : **81400505.4**

(22) Date de dépôt : **30.03.81**

(54) Agencement d'un pare-chocs sur un véhicule automobile.

(30) Priorité : **12.05.80 FR 8010579**

(43) Date de publication de la demande :
**18.11.81 Bulletin 81/46**

(45) Mention de la délivrance du brevet :
**13.06.84 Bulletin 84/24**

(84) Etats contractants désignés :
**DE GB IT**

(56) Documents cités :
**FR-A- 2 152 066**
**FR-A- 2 435 373**
**US-A- 3 926 462**
**US-A- 4 061 384**

(73) Titulaire : **AUTOMOBILES PEUGEOT**
**75, avenue de la Grande Armée**
**F-75116 Paris (FR)**

**AUTOMOBILES CITROEN**
**117-167 Quai André Citroën**
**F-75747 Paris Cedex 15 (FR)**

(72) Inventeur : **Dossin, Jacques**
**35, rue Brossolette**
**F-92400 Courbevoie (FR)**

(74) Mandataire : **Moncheny, Michel et al**
**c/o Cabinet Lavoix 2 Place d'Estienne d'Orves**
**F-75441 Paris Cedex 09 (FR)**

## Description

La présente invention se rapporte à un pare-chocs de véhicule automobile et à sa fixation sur la structure de ce véhicule.

Les pare-chocs sont de plus en plus fréquemment réalisés en matières plastiques, thermoplastiques ou thermodurcissables de façon que, lors d'un choc modéré, ils ne subissent que des déformations élastiques suivies d'un retour à leur forme initiale ne laissant subsister aucune trace apparente du choc.

Lorsque, comme cela est très fréquent, les pare-chocs sont reliés à la structure du véhicule par des supports constitués par des contre-lames métalliques, ces dernières peuvent subir des déformations permanentes sous l'effet de chocs qui ne produisent que des déformations élastiques sur le pare-chocs. Dans ce cas, le pare-chocs est bien intact, mais sa position n'est plus bonne par rapport à la structure.

Le brevet FR-A-2 43 53 73 décrit un agencement dans lequel le pare-chocs comporte dans sa partie centrale une butée venue de matière et qui est destinée, lors d'un choc à venir en appui contre une partie adjacente de la structure du véhicule. Cependant, dans un tel agencement, la butée n'est efficace que pour un choc intervenant à peu près dans l'axe du véhicule. Si au contraire, le choc se produit au droit de l'un des supports ou à l'extérieur de ceux-ci, la butée n'empêche aucunement ces supports de subir une déformation permanente.

L'invention a pour but de remédier à ces inconvénients.

Par rapport au brevet ci-dessus qui décrit déjà un agencement de pare-chocs sur un véhicule automobile, ce pare-chocs étant réalisé en matière plastique et fixé sur au moins un support métallique, lui-même fixé à un élément de structure du véhicule et comportant, venue de matière, au moins une butée déformable élastiquement et adaptée pour venir en appui sur la structure du véhicule, en cas d'impact subi par le pare-chocs, l'agencement selon l'invention est caractérisé en ce que la/ou chaque butée est disposée entre la structure du véhicule et la partie du support métallique sur laquelle est fixé le pare-chocs.

Deux exemples de réalisation font l'objet de la description qui suit, en référence aux dessins joints dans lesquels :

la Figure 1 est une coupe à travers un pare-chocs, suivant un plan vertical situé au droit d'une fixation ;

la Figure 2 est une vue suivant la flèche F de la Fig. 1, la structure du véhicule étant omise ;

les Figures 3 à 5 sont des vues en coupe suivant les lignes 3-3, 4-4 et 5-5 de la Fig. 1 ;

la Figure 6 est une coupe analogue à celle de la Fig. 1, pour un autre mode de réalisation ;

la Figure 7 est une coupe suivant la ligne 7-7 de la Fig. 6.

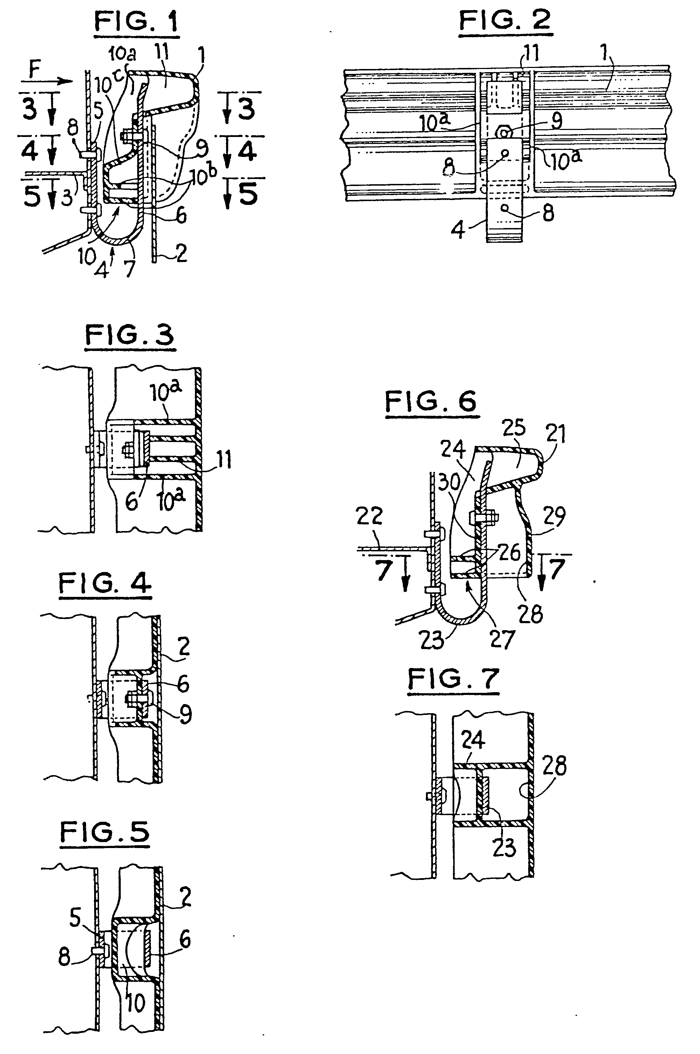

Les Fig. 1 à 5, relatives au premier exemple, montrent une fixation de pare-chocs 1 située au droit d'une plaque d'immatriculation 2. Le pare-chocs 1, réalisé en matériau plastique, thermoplastique ou thermodurcissable, est relié à une structure 3 de véhicule automobile par un support constitué par une contre-lame métallique 4. Celle-ci a une forme générale en U avec deux branches verticales 5, 6, reliées à leur base par une boucle 7 de section semi-circulaire. La branche 5 est fixée sur la structure 3 par des vis 8. Le pare-chocs est fixé sur la branche 6 par une vis 9. Cette fixation est entièrement cachée par la plaque d'immatriculation 2.

Conformément à l'invention, le pare-chocs 1 comprend dans sa zone de fixation, une butée 10, venue de matière et destinée à venir en appui sur la surface adjacente de la structure 3 du véhicule, en absorbant une certaine quantité d'énergie, par déformation élastique. Cette butée d'appui et d'absorption d'énergie, formant en quelque sorte tampon entre la branche 6 de la contre-lame et la structure 3 est composée d'éléments de paroi verticaux 10a et horizontaux 10b et d'un élément de paroi en Z, 10c, comportant une partie verticale où s'effectue la fixation par la vis 9. Les parois 10b et 10c s'étendent entre les deux ailes ou parois verticales 10a.

A la partie haute du pare-chocs, des nervures verticales 11 parallèles aux parois 10a et sur lesquelles s'appuie la partie supérieure de la branche 6 de la contre-lame 4, assurent la tenue du couple de basculement.

En cas de choc modéré sur le pare-chocs qui vient d'être décrit, la transmission des efforts à la structure 3 ne se fait pas par l'intermédiaire de la contre-lame 4, mais par l'intermédiaire de la butée d'appui 10 qui se déforme élastiquement en absorbant une certaine quantité d'énergie. Ce déplacement reste suffisamment limité pour que la déformation de la contre-lame se fasse également en phase élastique, au niveau de la boucle 7. Grâce à cette disposition, l'ensemble peut revenir dans sa position initiale après le choc.

On voit que l'objectif est bien atteint et ceci de façon très simple, l'intégration de l'absorbeur d'énergie au pare-chocs et sa position permettant d'utiliser des contre-lames particulièrement simples.

Dans l'exemple des Fig. 6 et 7, on retrouve un pare-chocs 21 fixé sur une structure 22 de véhicule automobile, au moyen de contre-lames 23 ayant la même forme que les contre-lames du premier mode de réalisation. Comme dans le premier exemple, le pare-chocs comprend des éléments de parois verticaux 24, 25 et horizontaux 26 qui constituent une zone 27 d'absorption d'énergie disposée entre la structure 22 et la partie de la contre-lame sur laquelle il est fixé.

Dans ce second exemple, chaque contre-lame est engagée dans un alvéole 28 s'ouvrant vers la base du pare-chocs, et délimité entre la face frontale 29 du pare-chocs, une paroi 30 en retrait et au niveau de laquelle est effectuée la fixation sur la contre-lame 23, et les deux parois verticales 24. Cette disposition permet de camoufler la fixation tout en ayant un profil extérieur continu pour le pare-chocs.

Le fonctionnement et les avantages sont les mêmes qu'avec le premier exemple.

L'agencement décrit peut bien entendu subir de nombreuses variantes, notamment en ce qui concerne la réalisation des éléments d'appui et d'absorption d'énergie dans la zone de fixation.

## Revendications

1. Agencement d'un pare-chocs sur un véhicule automobile, ce pare-chocs (1) étant réalisé en matière plastique et fixé sur au moins un support métallique (4 ; 23), lui-même fixé à un élément de structure (3 ; 22) du véhicule et comportant, venue de matière, au moins une butée (10 ; 27) déformable élastiquement et adaptée pour venir en appui sur la structure du véhicule, en cas d'impact subi par le pare-chocs, caractérisé en ce que la/ou chaque butée (10 ; 27), est disposée entre la structure (3 ; 22) du véhicule et la partie (6) du support métallique (4 ; 23) sur laquelle est fixé le pare-chocs (1).

2. Agencement suivant la revendication 1, caractérisé en ce que la ou chaque butée (10 ; 27) est constituée par des éléments de parois verticaux (10a ; 24) et horizontaux (10b ; 26).

3. Agencement suivant la revendication 1, caractérisé en ce qu'il est prévu des nervures verticales (11 ; 25) disposées entre la face extérieure du pare-chocs et la partie (6) du support métallique (4 ; 23) sur laquelle il est fixé.

4. Agencement suivant la revendication 1, caractérisé en ce que les supports métalliques (4, 23) sont des contre-lames ayant une forme en U dont une première branche (5) est fixée à la structure du véhicule, tandis que l'autre branche (6) est solidaire du pare-chocs, et en ce que la butée (10 ; 27) est disposée entre lesdites branches et/ou entre la deuxième branche (6) et la structure (3) du véhicule.

## Claims

1. An arrangement of a bumper on a motor vehicle, this bumper (1) being made from a plastics material and fixed on at least a metal support (4 ; 23) which is itself fixed to a structure element (3, 22) of the vehicle and comprising, in one piece therewith, at least one flexibly deformable abutment (10 ; 27) adapted to bear against the structure of the vehicle in the event of an impact to which the bumper is subjected, characterized in that the or each abutment (10 ; 27) is disposed between the structure (3 ; 23) of the vehicle and the part (6) of the metal support (4 ; 23) on which the bumper (1) is fixed.

2. An arrangement as claimed in claim 1, characterized in that the or each abutment (10 ; 27) is constituted by vertical wall elements (10a ; 24) and horizontal wall elements (10b ; 26).

3. An arrangement as claimed in claim 1, characterized in that there are provided vertical ribs (11 ; 25) disposed between the outer side of the bumper and the part (6) of the metal support (4 ; 23) on which it is fixed.

4. An arrangement as claimed in claim 1, characterized in that the metal supports (4 ; 23) are U-shaped counter-strips, a first branch (5) of which is fixed to the structure of the vehicle, whereas the other branch (6) is connected to the bumper and the abutment (10 ; 27) is disposed between said branches and/or between the second branch (6) and the structure (3) of the vehicle.

## Ansprüche

1. Anbringung einer Stoßstange an einem Automobil, wobei die Stoßstange (1) aus Kunststoff besteht und auf wenigstens einem Metallträger (4 ; 23) befestigt ist, der selbst an einem Konstruktionselement (3 ; 22) des Fahrzeugs angebracht ist und wobei dieser in Form eines Materialvorsprungs wenigstens einen elastisch verformbaren Anschlag (10, 27) aufweist, der geeignet ist, sich im Falle eines auf die Stoßstange ausgeübten Stoßes an die Fahrzeugkonstruktion anzulegen, dadurch gekennzeichnet, daß der oder jeder Anschlag (10 ; 27) zwischen der Konstruktion (3 ; 22) des Fahrzeugs und dem Teil (6) des Metallträgers (4 ; 23) angeordnet ist, an dem die Stoßstange (1) befestigt ist.

2. Anbringung nach Anspruch 1, dadurch gekennzeichnet, daß der oder jeder Anschlag (10, 27) durch Elemente von senkrechten (10a ; 24) und waagerechten (10b ; 26) Wänden gebildet ist.

3. Anbringung nach Anspruch 1, dadurch gekennzeichnet, daß senkrechte Rippen (11 ; 25) vorgesehen sind, die zwischen der Außenfläche der Stoßstange und dem Teil (6) des Metallträgers (4 ; 23) angeordnet sind, auf dem sie befestigt ist.

4. Anbringung nach Anspruch 1, dadurch gekennzeichnet, daß die Metallträger (4 ; 23) Gegenlamellen sind, die eine U-Form haben, dessen erster Arm (5) an der Konstruktion des Fahrzeugs befestigt ist, während der andere Arm (6) an der Stoßstange angebracht ist, und daß der Anschlag (10 ; 27) zwischen den Armen und/oder zwischen dem zweiten Arm (6) und der Konstruktion (3) des Fahrzeugs angeordnet ist.

# FIG. 1

# FIG. 2

# FIG. 3

# FIG. 4

# FIG. 5

# FIG. 6

# FIG. 7